(19) Europäisches Patentamt
European Patent Office
Office européen des brevets

(11) **EP 2 728 440 B1**

(12) **EUROPEAN PATENT SPECIFICATION**

(45) Date of publication and mention
of the grant of the patent:
**30.09.2015 Bulletin 2015/40**

(51) Int Cl.:
*G06F 1/26* (2006.01)        *G06F 1/32* (2006.01)

(21) Application number: **13188801.8**

(22) Date of filing: **16.10.2013**

(54) **Device and method for electric power management of a plurality of peripheral interfaces**

Vorrichtung und Verfahren zur Stromverwaltung einer Vielzahl von Peripherieschnittstellen

Dispositif et procédé de gestion de puissance électrique d'une pluralité d'interfaces périphériques

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.10.2012 EP 12306357**

(43) Date of publication of application:
**07.05.2014 Bulletin 2014/19**

(60) Divisional application:
**15182227.7**

(73) Proprietor: **Thomson Licensing
92130 Issy-les-Moulineaux (FR)**

(72) Inventors:
• **Bertin, Jean-Pierre**
35576 Cesson-Sévigné (FR)
• **Louchkoff, Marc**
35576 Cesson-Sévigné (FR)
• **Pesin, Anthony**
35576 Cesson-Sévigné (FR)

(74) Representative: **Lorette, Anne
Technicolor
1, rue Jeanne d'Arc
92130 Issy-les-Moulineaux (FR)**

(56) References cited:
**US-A1- 2008 244 282     US-A1- 2009 100 275
US-A1- 2010 157 498     US-A1- 2012 173 910**

## Description

## 1. Field of invention.

The present invention generally relates to the supply of power to interfaces of an electronic device.

## 2. Technical background.

Consumer electronic devices are commonly equipped with peripheral interfaces or (interface) ports, allowing them to receive power and possibly exchange data with a host electronic device. To ensure interoperability, these electronic devices, also called peripheral devices, function according to industry standards. Example industry standards are IEEE1394, also referred to as FireWire, Universal Serial Bus, commonly referred to as USB, or Power over Ethernet, commonly referred to as PoE. These industry standards define cables, connectors and communication protocols used in a serial bus for connection communication and power supply to external peripheral devices. While these standards were originally developed for data exchange, the peripheral interfaces that are compliant to these standards also allow for the electronic devices to obtain power from their host, which avoids them to require an independent power supply or external AC adapter. This has leveraged the development of non-communication capable devices such as lamps, electric razors or low power electric fans equipped with a compliant peripheral interface. Example devices that host peripheral interfaces are personal computers, digital still picture / video cameras, high definition digital televisions, digital set top boxes, smart phones, and game consoles. The industry standards are continuously updated to offer even better data throughput and increased power output. For example, the current output by individual ports of a hosting device such as a host or hub, is limited to 500mA (milli Amperes) for high-power USB peripherals according to USB 1.0, 2.0 and 3.0 (corresponding to 2.5 W, W standing for Watt) and 1.5A for USB 3.0 USB dedicated charging ports (7.5 W). For FireWire, the figures are 1.5A at maximum 30VDC. PoE provides up to 15.4 W of DC power (minimum 44 V DC and 350 mA) to each device. An updated PoE standard also known as PoE+, provides up to 25.5 W of power.

Devices that occasionally or continuously draw more current than a single interface port is capable of providing, can choose to connect to multiple ports at a same time. Current-limiting circuits are used to protect the host or hub from overload because of what is commonly referred to as 'overcurrent'. An overcurrent condition on a peripheral interface can result in the peripheral interface being closed down by the host or hub (i.e. the connection between a corresponding peripheral interface and the power circuit is switched off), and thus the impossibility to continue to use the peripheral interface and the peripheral device connected to it until the peripheral device is unplugged, the unplugging action resetting the overcurrent condition. Such over current condition can even occur if the connected device only shortly exceeds the maximum allowed current.

Document US 8,218,279 describes an electronic device and method for dynamic USB power assignment, that enables USB peripherals to exceed the maximum current specified by the USB standards as long as the total of the maximum allowed current supplied on its USB ports is respected. However, if the total current supplied on the USB ports exceeds the total maximum allowed current, ports are closed down using relays that cut off port power. Thus, while the limits of maximum current provided to each individual USB port are increased, the problem of closing down USB ports and a user being confronted with unresponsive peripherals remains problematic.

There is thus a need for further optimization of prior art solutions.

## 3. Summary of the invention.

The present invention aims at alleviating some inconveniences of prior art.

To this end, the invention comprises among others a method for electric power management of a plurality of peripheral interfaces for connecting a plurality of peripheral devices to an electronic device, the method comprising detecting that the sum of electric currents delivered to the plurality of peripheral interfaces exceeds a predetermined limit; selecting, upon the detecting, at least one peripheral interface of the plurality of peripheral interfaces for limiting electric current delivered to the selected at least one peripheral interface; and limiting electric current delivered to the selected at least one peripheral interface to a maximum value, the maximum value being equal to the predetermined limit minus the sum of electric currents delivered to peripheral interfaces that have not been selected in the selecting step.

According to a variant embodiment of the method of the invention, the detecting further comprises taking into account a predetermined minimal time duration of exceeding the predetermined limit.

According to a variant embodiment of the method of the invention, the method comprises changing of a signal on the selected at least one peripheral interface selected in the selecting step, for indicating a limiting of electric current delivered to the selected at least one peripheral interface.

According to a variant embodiment of the method of the invention, the level of the signal is determined by the maximum value.

According to a variant embodiment of the method of the invention, the method comprises transmission of a message on the selected at least one peripheral interface selected in the selecting step, the message indicating the limiting of electric current delivered to the selected at least one peripheral interface.

According to a variant embodiment of the method of the invention, the message comprises the maximum value.

According to a variant embodiment of the method of the invention, the selecting comprises choosing for limiting electric current, among the at least one peripheral interfaces of the plurality of peripheral interfaces to which is connected a peripheral device that specified upon connection to the electronic device a maximum electric current need that exceeds that of a predetermined threshold for a standard peripheral device.

According to a variant embodiment of the method of the invention, the method further comprising choosing, for limiting electric current, among the at least one peripheral interfaces of the plurality of peripheral interfaces to which is connected a peripheral device that is a non data communicating device.

According to a variant embodiment of the method of the invention, the method further comprising choosing, for limiting electric current, among the at least one peripheral interfaces of the plurality of peripheral interfaces which are dedicated charging ports.

According to a variant embodiment of the method of the invention, the method further comprising choosing, for limiting electric current, among the at least one peripheral interfaces of the plurality of peripheral interfaces which are low priority devices.

According to a variant embodiment of the method of the invention, the plurality of peripheral interfaces are according to a version of Universal Serial Bus.

The current invention also concerns a device for electric power management of a plurality of peripheral interfaces connecting a plurality of peripheral devices, the device comprising a detector detecting if the sum of electric currents delivered to the plurality of peripheral interfaces exceeds a predetermined limit; a selector for selecting upon the detecting, at least one peripheral interface of the plurality of peripheral interfaces for limiting electric current delivered to the selected at least one peripheral interface; and a current limiter limiting electric current delivered to the selected at least one peripheral interface to a maximum value, the maximum value being equal to the predetermined limit minus the sum of electric currents delivered to the peripheral interfaces that have not been selected by the selector.

According to a variant embodiment of the device of the invention, the device further comprises a timer for taking into account a predetermined minimal time duration of exceeding the predetermined limit.

According to a variant embodiment of the device of the invention, the device further comprises an interface line on the peripheral interfaces on which is provided a signal that changes on the at least one peripheral interface selected by the selector, for indicating the limiting of electric current delivered to the at least one peripheral interface.

According to a variant embodiment of the device of the invention, the device further comprises a message transmitter for transmission of a message on the at least one peripheral interface selected by the selector, the message indicating the limiting of electric current delivered to the selected at least one peripheral interface.

## 4. List of figures.

More advantages of the invention will appear through the description of particular, non-restricting embodiments of the invention. The embodiments will be described with reference to the following figures:

Figure 1 is a block-diagram of a host device 10 implementing a prior art solution for an electronic device and method for dynamic USB power assignment.

Figure 2 is a block diagram of an arrangement 20 according to a non-limiting example embodiment of a solution for electric power management of peripheral interfaces according to the invention.

Figure 3 is a diagram of a detail of the arrangement 20 of figure 2, providing a non-limiting example embodiment of a peripheral interface according to the invention, such as for example the peripheral interfaces 24, 27 of figure 2.

Figure 4 is a block diagram of an electronic device 40 according to a non-limiting example embodiment of the invention.

Figure 5 is a logical diagram of the method of the invention according to a non-limiting example embodiment.

## 5. Detailed description of the invention.

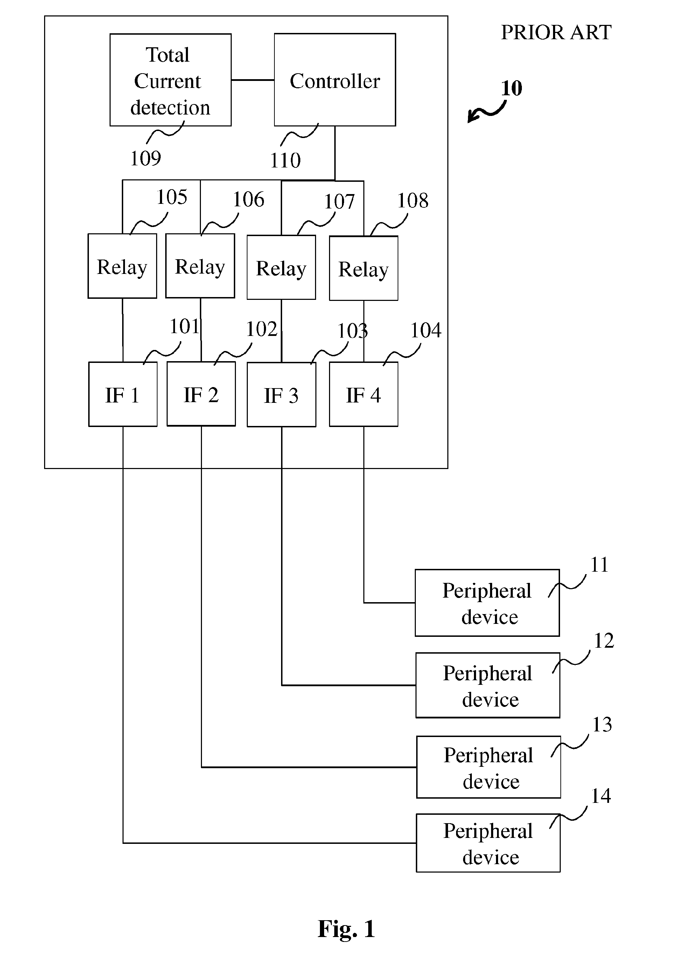

**Figure 1** is a block-diagram of a host device 10 implementing a prior art solution for an electronic device and method for dynamic USB power assignment. An electronic device 10 is equipped with multiple USB ports 101-104 that are connected to multiple USB devices 11-14. Device 10 has a power circuit (not shown) that provides power to each of the USB ports 101-104 up to a certain maximum power level. The device 10 further comprises relay circuits 105-108 that can cut off power to a USB device connected to the USB ports, one relay circuit per USB port, a total current detection circuit 109, and a controller circuit 110.

The power circuit is dimensioned such that it can supply sufficient power to all of the USB ports at the same time if needed up to a certain predetermined total limit; typically 500mA per USB port according to the USB specification. While this prior-art host device allows an individual USB device to draw more current than a maximum current available per USB port that is predetermined according to the USB standard (i.e. 500mA), the power supply to a USB port will be cut off by the controller 110 and one of the relays 105-108 if the total current detection circuit 109 detects that the set of USB devices 11-14 require more power than a predetermined total limit, for example 2 A. If this occurs, the USB device must be removed from the disabled USB port for the USB port to be used again. USB devices that need more current than a standard USB device, can connect to multiple USB ports at a same time in order to obtain enough power to use the USB device without provoking an USB port being shutdown. Evidently, this reduces the possibility to connect other peripheral devices to the device 10, even if the device 10 would be able to supply enough power to all peripheral devices. It may also be necessary to disconnect other USB devices to ensure that total available power available for all USB ports is not exceeded.

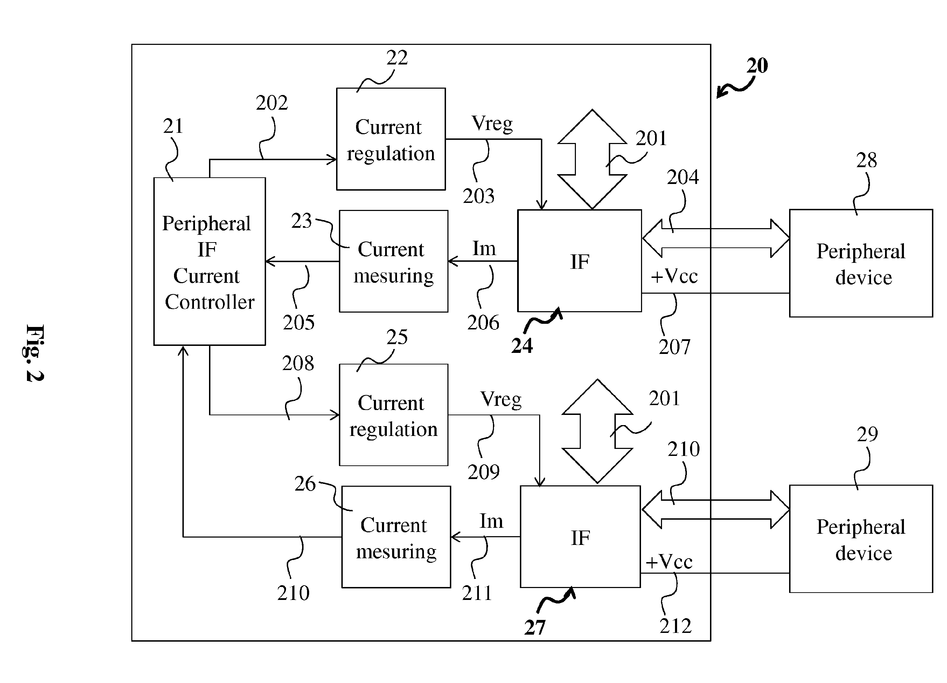

**Figure 2** is a block diagram of an arrangement 20 according to a non-limiting example embodiment of a solution for electric power management of peripheral interfaces according to the invention. The arrangement is for example implemented in a personal computer, a gateway for providing e.g. triple play services in a household (telephony, television, and Internet), or a USB, FireWire or Ethernet hub. The arrangement 20 supplies power to peripheral devices 28 and 29 that connect to the peripheral interfaces 24 and 27 via power feeds 207 and 212 of each peripheral interface (marked '+Vcc'). The device implementing the arrangement optionally exchanges data with the peripheral devices via a data bus 201 and data lines 204/210 provided on each of the peripheral interfaces 24 and 27. The arrangement 20 comprises a current regulation circuit (22, 25) and a current measuring circuit (23, 26) for each peripheral interface (24, 27). The current measuring circuits and the current regulation circuits are connected to a peripheral interface current controller 21 (via connections 202/205 and 208/210). The peripheral interface current controller 21 manages the current provided to each of the peripheral interfaces on an individual basis while taking into account the maximum total current available for all peripheral interfaces. The current measuring circuits receive their input from the peripheral interfaces via connections 206 and 211 (marked 'Im'). The current regulation circuits output their current regulation to the peripheral interfaces via connections 203 and 209 (marked 'Vreg').

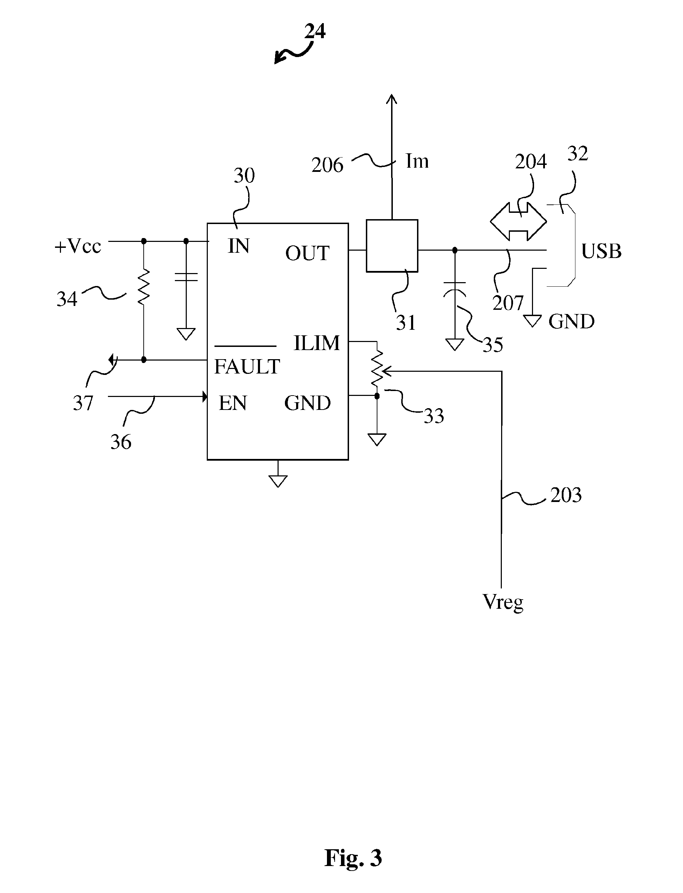

**Figure 3** is a diagram of a detail of the arrangement 20 of figure 2, providing a non-limiting example embodiment of a peripheral interface according to the invention, such as for example the peripheral interfaces 24 and 27 of figure 2. In this embodiment, a precision adjustable current limited power distribution switch 30 is used, such as for example the Texas Instruments TPS2553. The manufacturers' data sheet gives information for choosing components 34 and 35. Component 30 offers a current-limit threshold between 75 mA and 1.7 A that is determined via an external resistor 33 that is connected to input ILIM. According to the present embodiment, the external resistor 33 is a digital potentiometer or DCP, for example XICOR X9C104. The resistance of the DCP is controlled by the signal 203 (Vreg) from the current regulation circuit 22. According to the present embodiment, the power that is supplied via pin 'OUT' of component 30, instead of being directly connected to the peripheral interface, passes through a circuit 31 that converts the electrical current drawn by a peripheral device connected to the peripheral interface to an electrical tension, and outputs that tension to current measuring circuit 23 via connection 206 (Im). The component 30 has further connections that are not further detailed here: EN 36, being the component enable signal, FAULT output 37 that asserts low during overcurrent and reverse-voltage conditions.

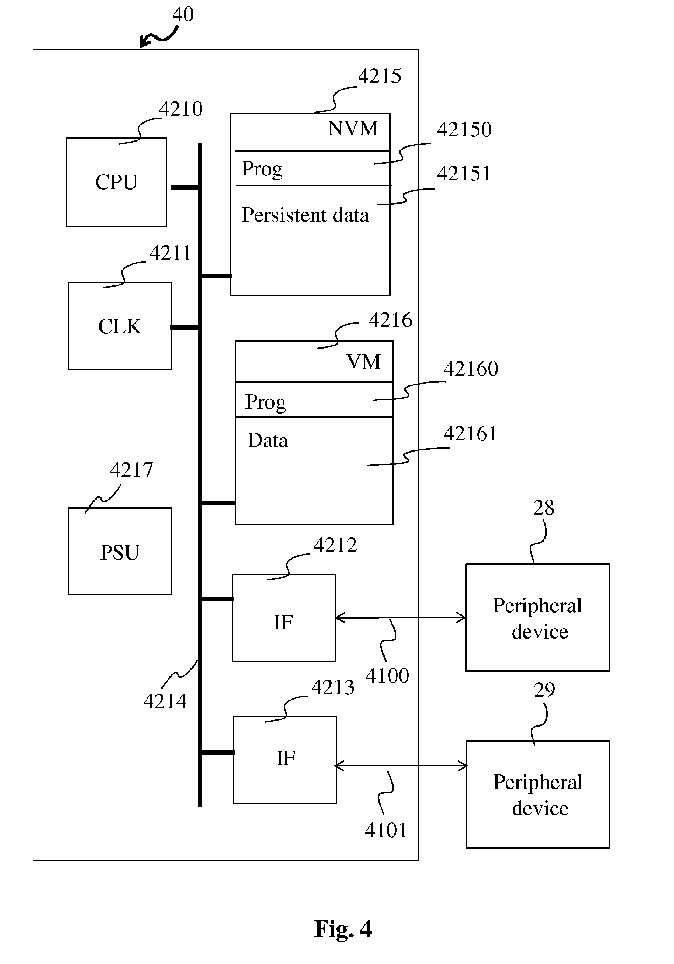

**Figure 4** is a block diagram of an electronic device 40 according to a non-limiting example embodiment of the invention, that implements the method for electric power management described previously. The electronic device is for example a general purpose personal computer, or a dedicated peripheral interface hub. The electronic device 40 comprises a CPU or central processing unit 4210, a clock unit 4211, two peripheral interfaces 4214 and 4213, a NVM or Non Volatile Memory 4215, comprising multiple memory zones among which are at least 42150 and 42151, a Volatile Memory 4216, comprising multiple memory zones among which are at least 42160 and 42161, an internal data communication bus 4214, interconnecting the previously mentioned units, and a PSU or power supply unit 4217.

PSU 4217 provides electrical power to units 4210 (CPU), 4211 (Clock), 4212/4213 (peripheral interfaces), 4215 and 4216 (memories). Internal data communication bus 4214 provides CPU 4210, peripheral interfaces 4214 and 4213, NVM 4215 and VM 4216 with communication means. Clock unit 4211 provides the latter units with a common time reference for synchronization of their operation and for other timing purposes. Peripheral interfaces 4214 and 4213 each have their respective physical interface link 4100 and 4101 for connection to compatible peripheral devices, such as for example devices 28 and 29. The physical interface links comprise at least a power line such as 207/212 of figure 2 for feeding power to a connected peripheral device, and optionally at least one data communication line such as 204/210. NVM 4215 is for example a ROM (Read Only Memory), PROM (Programmable read only memory), EEPROM (Electrically Erasable programmable read only memory), NVRAM (Non-Volatile Random Access Memory), or a HDD (Hard Disk Drive), or a combination of these. VM 4216 is for example a RAM (Random Access Memory). Memory zone 42150 of NVM 4215 comprises a storage for storing a computer readable program that comprises computer readable instructions for execution of the method of the invention by CPU 4210. The program is copied to VM 4216 memory zone 42160 upon startup of electronic device 40, and the CPU 4210 fetches the program instructions from this memory zone. NVM 4215 memory zone 42151 comprises persistent data, such as variables or parameters that are used by the program and that are regularly saved in this memory zone in order to be persistent over power outages or entry into standby mode. The persistent data comprises for example copies of variables or parameters that are stored in VM 4216 memory zone 42161 during execution of the program, for example the predetermined limit that is used in the step of detecting if the sum of electric currents delivered to the peripheral interfaces is exceeded. The electronic device comprises in particular means for detecting a sum of electric currents: the peripheral interfaces 4212 and 4213 communicate the electric currents delivered to them to CPU 4210, the latter calculates their sum, and verifies if the sum exceeds the predetermined limit stored in persistent data memory zone 42151; particular means for selecting upon the detection one or more peripheral interfaces for limiting of the electric current delivered to these: CPU 4210 executes a part of the program stored in VM 4216 that relates to making the choice; and particular means for limiting the electric current delivered to the selected peripheral interface(s) to a maximum value being the predetermined limit minus the sum of electric currents delivered to the peripheral interfaces that are not selected for limiting electric current: CPU 4210 executes a part of the program stored in VM 4216 that relates to limiting the electric current delivered to the chosen peripheral interface(s) and to calculating the previously mentioned maximum value, the CPU 4210 subsequently communicating or setting the maximum value to the concerned peripheral interface(s).

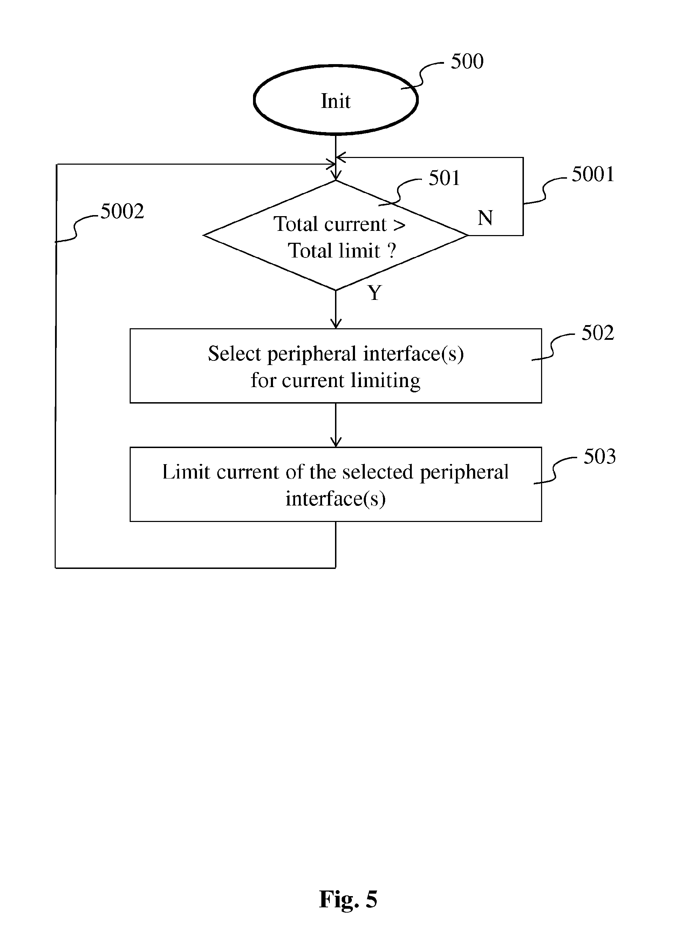

**Figure 5** is a logical diagram of the method of the invention according to a non-limiting example embodiment. The method is for example implemented by electronic device 40 of figure 4, or by an electronic device that comprises the arrangement 20 of figure 2.

In an initialization step of 500, variables that are used for the method are initialized, for example the variables stored in register 42161 of memory VM 4216 of host device 40, or a register in peripheral interface current controller 21.

In a decisional step 501 a detecting is done if a sum of electric currents delivered to the plurality of peripheral interfaces exceeds a predetermined limit, also referred to as an overcurrent situation. In device 40 of figure 4, this is for example done via a communication between the CPU 4210 and the interfaces 4212 and 4213 via internal data communication bus 4214, the interfaces transmitting information on the current drawn to the CPU. The predetermined limit is for example stored in persistent data zone 42151 of memory 4216. The calculation of the sum of currents is for example done by CPU 4210. Alternatively, referring to the example arrangement 20 of figure 2, the detecting is done by a detector that comprises peripheral interface controller 21, that receives its information on current drawn by peripheral devices from current measuring circuits 23 and 26 via for example circuit 31 of figure 3, calculates the sum, and compares it with the predetermined limit stored in peripheral interface current controller 21.

If such overcurrent situation is not detected in detecting step 501, the method reiterates via 5001 to detecting step 501.

If such overcurrent situation is however detected in detecting step 501, it is determined in a selection step 502 which of the peripheral interfaces of the plurality of interfaces are chosen for current limitation. This selection is for example done by CPU 4210 of device 40 of figure 4, or by a selector that comprises the peripheral interface current controller 21 of the arrangement 20 of figure 2.

Then, in a step 503, the electric current delivered to the one or more peripheral interfaces that were selected in selecting step 502 is limited to a limiting value. The limiting value is a maximum electric current value and is calculated as being equal to the previously discussed predetermined limit minus the sum of currents that are delivered to peripheral interfaces that have not been selected for current limitation in selecting step 502. Referring to the example embodiment of figure 4, this current limiting is done by CPU 4210 that communicates limiting value to interface 4212 and/or to interface 4213 via internal data communication bus 4214. Referring to the arrangement 20 of figure 3, the current limiting is done by peripheral interface controller 21, that controls current regulation circuits 22 and/or 25, which in turn set the regulation current Vreg of interfaces 24 and/or 27, for example by adjusting the value of resistance of DCP 33 of figure 3. As an example, considering that there a four peripheral devices A, B, C, D connected to four peripheral interfaces managed by the method of the invention, among which are three 'standard' peripheral devices A, B, and C, consuming respectively 350, 250mA and 500mA, and one 'non standard' device D, consuming 1000mA. Considering further according to this example that the predetermined limit is set to 2A and that the 'non standard' device D is chosen for the limiting, the maximum value is then for example calculated as being $2000mA - (350mA_A + 250mA_B + 500mA_C) = 2000mA - 1100mA = 900mA_D$, and the current supplied to the non standard device D is then limited to this value. More formally, this can be expressed in the following formula:

$$(1) \qquad I_{max} = I_{limit} - \sum_{i=1}^{n} I_{periph\,i}$$

Where $I_{max}$ is the discussed maximum value of current that is set as a limit for the at least one peripheral interface that has been chosen in the selecting step 502, $I_{limit}$ is the value of current that corresponds to the predetermined limit, $i$ corresponds to the number of peripheral interfaces that have not been selected in the selected step 502, and $I_{periphi}$ corresponds to the current supplied to peripheral interface i of the latter peripheral interfaces.

Finally, the method reiterates via 5002 to return to the detecting step 501.

The method is also applicable when several peripheral devices each draw enough current to exceed the predetermined limit. For example, there are two devices A and B each drawing 500mA and two peripheral devices C and D each drawing 1100mA. Each of the combinations A+B+C or A+B+D or C+D exceeds the predetermined limit of 2A. If in the selecting step both C and D are chosen for current limiting (for example, because both peripherals draw more current than a "standard" peripheral device), according to (1) there remains 2A - $(0.5_A + 0.5_B)$ = 1A available for both C and D, and by consequence the sum of current delivered to C and D is limited to 1A, for example 500mA for C and 500mA for D. If alternatively in the selecting step only for example C is chosen for limiting current (for example, because device C is a "non data communicating" or a "non-standard" peripheral device), (1) will give 2A - $(0.5_A+0.5_B+1.1_D)$ = -0.1A. In this case even if zero current is delivered to C, the total current drawn by peripherals A-D still exceeds the predetermined limit with 0.1A. Then, as the method is iterated, the current delivered to D (1.1A) is limited to 1A as (1) gives: 2A - $(0.5_A+0.5_B+0_C)$ = 1 A.

According to a variant embodiment of the method of the invention, the detection comprises taking into account of a predetermined minimal time duration of exceeding of the predetermined limit. This function is for example implemented using a timer unit (such as clock 4211 of device 40). This has the advantage to allow excess current spikes, such as those that occur when a spindle motor of an external hard disk is powered on as the hard disk is accessed for a read or write operation (commonly referred to as inrush current). This excess current spike can be provided by a capacitor mounted in the power line of the peripheral interface that feeds power to the peripheral device, such as capacitor 35 of figure 3. Alternatively, the PSU has circuits that allow providing overcurrent during the predetermined minimal time. The predetermined minimal time is set to a value that is determined by the hardware such as that of the PSU or the peripheral interface.

According to a variant embodiment of the method of the invention that can advantageously be combined with any of the previous variant embodiments, the method comprises a step of changing of a signal on the one or more peripheral interfaces selected in the selecting step, for indicating the limiting of electric current delivered to the one or more peripheral interfaces. This variant has the advantage to offer to the concerned peripheral device(s) that is connected to the peripheral interface an opportunity to reduce the current drawn or to inform the user of the device of an overcurrent situation occurring. Such a signal can be provided on a dedicated interface pin that is supplementary to the other lines on the peripheral interface.

According to a variant embodiment of the method of the invention that can advantageously be combined with the previous variant embodiment, the level of the signal is determined by the maximum value. Then, the concerned peripheral device(s) can determine the maximum value of the current which it should not exceed, and possibly adapt its current consumption, possibly in real time. The level of the signal is for example proportional to the maximum value. For example, when the current is not limited, the level of the signal is 0V, indicating that for example 2A is available. A maximum of 5V indicates that 0mA is available. A value of 2,5V indicates that 1A is available. According to a variant embodiment, the level of the signal is inverse proportional. According to a variant embodiment, the level of the signal is adapted in steps, each step indicating a progressive limiting of current.

According to a variant embodiment of the method of the invention that can advantageously be combined with any of the previous variant embodiments, the method comprises transmission of a message on the one or more peripheral interfaces selected in the selecting step, the message indicating the limiting of electric current delivered to the one or more peripheral interfaces. As with the discussed variant of changing of a signal on the peripheral interface, this variant allows to indicate to the selected peripheral device that electric current is limited in the limiting step. Such a message transmission can be assured by a message transmitter unit (not shown).

According to a variant embodiment of the method of the invention that can advantageously be combined with the previous embodiment, the message comprises the maximum value, so that the selected peripheral device can reduce the current drawn to the maximum value provided in the message.

According to a variant embodiment of the method of the invention that can advantageously be combined with any of the previous embodiments, the selecting step comprises choosing for limiting electric current, among the one or more peripheral interfaces of the plurality of peripheral interfaces to which is connected a peripheral device that has specified, upon connection to the peripheral interface, a maximum electric current need that exceeds that of a predetermined threshold for a standard peripheral device. This allows for example to privilege for the choosing of current limiting those devices that are not "standard" peripheral devices. The notion of "standard peripheral device" is for example according to the standard of implementation of the peripheral interface and is defined by the concerned industrial standard; for example, a USB device that draws more than 500mA is considered as being a non-standard device.

According to a variant embodiment of the method of the invention that can advantageously be combined with any of the previous embodiments, the method further comprises choosing, for limiting electric current, among the one or more peripheral interfaces of the plurality of peripheral interfaces to which is connected a peripheral device that is a non data communicating device. A "non-data communicating device" is a peripheral device that does not communicate with the electronic device via the peripheral interface to which it is connected. This variant has the advantage, when an overcurrent situation occurs, to primarily limit the current provided to non-data communicating peripheral devices, such as for example the previously mentioned cooling fan or electrical razor charger, while providing current as needed to an external hard disk drive.

According to a variant embodiment of the method of the invention that can advantageously be combined with any of the previous embodiments, the method further comprises choosing, for limiting electric current, among the one or more peripheral interfaces which are dedicated charging ports. This variant has the advantage, when an overcurrent situation occurs, to primarily limit the current provided to pure charging devices, while continuing to provide current as needed to data communicating devices such as the previously mentioned external hard disk drive.

According to a variant embodiment of the method of the invention that can advantageously be combined with any of the previous embodiments, the method further comprising choosing, for limiting electric current, among the at least one peripheral interfaces of the plurality of peripheral interfaces which are low priority. This variant comprises definition of priority classes for peripheral devices, or definition of priority peripheral interfaces. When an overcurrent situation occurs, the current provided to low priority peripheral devices or peripheral interfaces is limited, while continuing to provide current as needed to high(er) priority peripheral devices or peripheral interfaces.

According to a variant embodiment of the method of the invention that can advantageously be combined with any of the previous embodiments, the plurality of peripheral interfaces are according to a version of Universal Serial Bus, such as USB 1.0, 2.0 or 3.0 or other versions, or according to a version of IEEE1394 FireWire, or according to a version of PoE (Power over Ethernet).

According to a variant embodiment of the method of the invention that can advantageously be combined with any of the previous embodiments, a time slot reservation mechanism is used for current limiting. For example, a device can reserve a time slot for temporarily exceeding 500mA, being the maximum current consumption of a "standard" USB device, during a specified time or during a specified number of time slots, the time slots having a predetermined duration. According to a variant embodiment, the time slot reservation comprises the maximum current needed by the peripheral device during the time slot duration. This variant embodiment requires a time slot management controller but allows smoothing out the current consumption of the peripheral devices over time and avoiding overcurrent situations from occurring. The time slot management controller can be added to the program 42150 of the electronic device 40 of figure 4, or a time slot management module can be added to peripheral interface current controller 21 of the arrangement 20 of figure 2 for this purpose.

The current invention allows thus a more flexible management of supplying electrical power to peripheral devices than is possible according to cited prior art. Among other advantages, the invention allows to continue to provide power to peripheral devices when a situation of overcurrent occurs. Among advantages of variants of the present invention, peripheral devices are informed of an overcurrent situation occurring, and can adapt their electric current consumption consequently, delay or postpone actions that provoke an overcurrent situation. Thus, according to one of the advantages of the present invention, peripheral devices can continue to function correctly even if the total maximum current that they can draw exceeds the total maximum current that an electronic device hosting the peripheral interfaces can provide.

The implementation of the invention is not limited to the embodiments shown. For example, the reader will understand that although figures 2 and 4 illustrate an embodiment with two peripheral interfaces, the method and device of the invention are suited to function with any number of peripheral interfaces, such as 3, 4, 5, 10 or less or more.

Likewise, the reader will understand that the implementation of the method or the invention is not restricted to an implementation as depicted in figure 5, and that the steps can be executed in a different order, or in parallel to gain processing time.

The present invention is not limited to the standard peripheral interfaces and protocols discussed here, such as USB, FireWire or PoE, and is applicable to any kind of peripheral interface, proprietary or standardized, serial or parallel, where power is supplied to a peripheral device connected to it via the peripheral interface.

The discussed variants can be used apart, or combined between them to provide a particularly advantageous variant embodiment of the invention.

Although some of the described embodiments discuss a use of electronic circuits, some functions that are presented as being implemented by dedicated electronic circuits may instead be implemented in software to reduce production costs of an electronic device implementing the present invention.

Alternatively, the invention is implemented using a mix of hard-and software components, where dedicated hardware components provide functions that are alternatively executed in software. According to a particular embodiment, the invention is entirely implemented in hardware, for example as a dedicated component (for example as an ASIC, FPGA or VLSI) (respectively « Application Specific Integrated Circuit », « Field-Programmable Gate Array » and « Very Large Scale Integration ») or as distinct electronic components integrated in a device or in a form of a mix of hardware and software.

**Claims**

1. A method for electric power management of a plurality of peripheral interfaces (4213, 4214; 24, 27) for connecting a plurality of peripheral devices (28, 29) to an electronic device (40; 20), **characterized in that** the method comprises:

detecting (501) that the sum of electric currents delivered to the plurality of peripheral interfaces exceeds a predetermined limit;
selecting (502), upon said detecting, at least one peripheral interface of said plurality of peripheral interfaces for limiting electric current delivered to the selected at least one peripheral interface; and
limiting (503) electric current delivered to the selected at least one peripheral interface to a maximum value, the maximum value being equal to the predetermined limit minus the sum of electric currents delivered to peripheral interfaces that have not been selected in the selecting step.

2. The method according to Claim 1, wherein the detecting further comprises taking into account a predetermined minimal time duration of exceeding the predetermined limit.

3. The method according to Claim 1 or 2, wherein the method comprises changing of a signal on the selected at least one peripheral interface selected in the selecting step, for indicating a limiting of electric current delivered to the selected at least one peripheral interface.

4. The method according to Claim 3, wherein the level of the signal is determined by the maximum value.

5. The method according to any of Claims 1 to 4, wherein the method comprises transmission of a message on the selected at least one peripheral interface selected in the selecting step, the message indicating the limiting of electric current delivered to the selected at least one peripheral interface.

6. The method according to Claim 5, wherein the message comprises the maximum value.

7. The method according to any of Claims 1 to 6, wherein the selecting comprises choosing for limiting electric current, among the at least one peripheral interfaces of the plurality of peripheral interfaces to which is connected a peripheral device that specified upon connection to the electronic device a maximum electric current need that exceeds that of a predetermined threshold for a standard peripheral device.

8. The method according to any of Claims 1 to 7, the method further comprising choosing, for limiting electric current, among the at least one peripheral interfaces of the plurality of peripheral interfaces to which is connected a peripheral device that is a non data communicating device.

9. The method according to one of Claims 1 to 8, the method further comprising choosing, for limiting electric current, among the at least one peripheral interfaces of the plurality of peripheral interfaces which are dedicated charging ports.

10. The method according to one of Claims 1 to 9, the method further comprising choosing, for limiting electric current, among the at least one peripheral interfaces of the plurality of peripheral interfaces which are low priority devices.

11. The method according to one of Claims 1 to 10, the plurality of peripheral interfaces are according to a version of Universal Serial Bus.

12. A device for electric power management of a plurality of peripheral interfaces (24, 27) connecting a plurality of peripheral devices, **characterized in that** the device comprises:

a detector detecting if the sum of electric currents delivered to the plurality of peripheral interfaces exceeds a predetermined limit;
a selector for selecting upon said detecting, at least one peripheral interface of said plurality of peripheral interfaces for limiting electric current delivered to the selected at least one peripheral interface; and
a current limiter limiting electric current delivered to the selected at least one peripheral interface to a maximum value, the maximum value being equal to the predetermined limit minus the sum of electric currents delivered to the peripheral interfaces that have not been selected by said selector.

13. The device according to Claim 12, further comprising a timer for taking into account a predetermined minimal time duration of exceeding the predetermined limit.

14. The device according to Claim 12 or 13, further comprising an interface line on the peripheral interfaces on which is provided a signal that changes on the at least one peripheral interface selected by the selector, for indicating the limiting of electric current delivered to the at least one peripheral interface.

15. The device according to any of Claims 12 to 14, further comprising a message transmitter for transmission of a message on the at least one peripheral interface selected by the selector, the message indicating the limiting of electric current delivered to the selected at least one peripheral interface.

**Patentansprüche**

1. Verfahren für das Management elektrischer Leistung mehrerer Peripherieschnittstellen (4213, 4214; 24, 27) zum Verbinden mehrerer Peripherievorrichtungen (28, 29) mit einer elektronischen Vorrichtung (40; 20), **dadurch gekennzeichnet, dass** das Verfahren umfasst:

Detektieren (501), dass die Summe elektrischer Ströme, die an die mehreren Peripherieschnittstellen geliefert werden, einen vorgegebenen Grenzwert übersteigt;

beim Detektieren Auswählen (502) mindestens einer Peripherieschnittstelle der mehreren Peripheriestellen zum Begrenzen des an die ausgewählte mindestens eine Peripherieschnittstelle gelieferten elektrischen Stroms; und

Begrenzen (503) des an die ausgewählte mindestens eine Peripherieschnittstelle gelieferten elektrischen Stroms auf einen Maximalwert, wobei der Maximalwert gleich dem vorgegebenen Grenzwert, abzüglich der Summe elektrischer Ströme, die an Peripherieschnittstellen geliefert werden, die in dem Schritt des Auswählens nicht ausgewählt worden sind, ist.

2. Verfahren nach Anspruch 1, wobei das Detektieren ferner das Berücksichtigen einer vorgegebenen minimalen Zeitdauer des Überschreitens des vorgegebenen Grenzwerts umfasst.

3. Verfahren nach Anspruch 1 oder 2, wobei das Verfahren das Ändern eines Signals an der ausgewählten mindestens einen Peripherieschnittstelle, die in dem Schritt des Auswählens ausgewählt worden ist, um eine Begrenzung des an die ausgewählte mindestens eine Peripherieschnittstelle gelieferten elektrischen Stroms anzugeben, umfasst.

4. Verfahren nach Anspruch 3, wobei der Pegel des Signals durch den Maximalwert bestimmt wird.

5. Verfahren nach einem der Ansprüche 1 bis 4, wobei das Verfahren die Sendung einer Nachricht an der ausgewählten mindestens einen Peripherieschnittstelle, die in dem Schritt des Auswählens ausgewählt wird, umfasst, wobei die Nachricht das Begrenzen des an die ausgewählte mindestens eine Peripherieschnittstelle gelieferten elektrischen Stroms angibt.

6. Verfahren nach Anspruch 5, wobei die Nachricht den Maximalwert umfasst.

7. Verfahren nach einem der Ansprüche 1 bis 6, wobei das Auswählen zum Begrenzen des elektrischen Stroms das Wählen der mehreren Peripherieschnittstellen, mit denen eine Peripherievorrichtung verbunden ist, die beim Verbinden mit der elektronischen Vorrichtung einen maximalen Bedarf an elektrischem Strom spezifiziert hat, der einen vorgegebenen Schwellenwert für eine Standardperipherievorrichtung übersteigt, unter den mindestens einen Peripherieschnittstellen umfasst.

8. Verfahren nach einem der Ansprüche 1 bis 7, wobei das Verfahren zum Begrenzen des elektrischen Stroms ferner das Wählen der mehreren Peripherieschnittstellen, mit denen eine Peripherievorrichtung verbunden ist, die keine Datenkommunikationsvorrichtung ist, unter den mindestens einen Peripherieschnittstellen umfasst.

9. Verfahren nach einem der Ansprüche 1 bis 8, wobei das Verfahren zum Begrenzen des elektrischen Stroms ferner das Wählen der mehreren Peripherieschnittstellen, die dedizierte Ladeanschlüsse sind, unter den mindestens einen Peripherieschnittstellen umfasst.

10. Verfahren nach einem der Ansprüche 1 bis 9, wobei das Verfahren zum Begrenzen des elektrischen Stroms ferner das Wählen der mehreren Peripherieschnittstellen, die Vorrichtungen mit niedriger Priorität sind, unter den mindestens einen Peripherieschnittstellen umfasst.

11. Verfahren nach einem der Ansprüche 1 bis 10, wobei die mehreren Peripherieschnittstellen in Übereinstimmung mit einer Version des Universal Serial Bus stehen.

12. Vorrichtung für das Management elektrischer Leistung mehrerer Peripherieschnittstellen (24, 27), die mehrere Peripherievorrichtungen verbinden, **dadurch gekennzeichnet, dass** die Vorrichtung umfasst:

einen Detektor, der detektiert, ob die Summe der an die mehreren Peripherieschnittstellen gelieferten elektrischen Ströme einen vorgegebenen Grenzwert übersteigt;

eine Auswahleinrichtung, um beim Detektieren mindestens eine Peripherieschnittstelle der mehreren Peripherieschnittstellen zum Begrenzen des an die ausgewählte mindestens eine Peripherieschnittstelle gelieferten elektrischen Stroms auszuwählen; und

eine Strombegrenzungseinrichtung, die den an die ausgewählte mindestens eine Peripherieschnittstelle gelieferten elektrischen Strom auf einen Maximalwert begrenzt, wobei der Maximalwert gleich dem vorgegebenen Grenzwert, abzüglich der Summe elektrischer Ströme, die an die Peripherieschnittstellen geliefert werden, die durch die Auswahleinrichtung nicht ausgewählt worden sind, ist.

**13.** Vorrichtung nach Anspruch 12, die ferner einen Zeitmesser zum Berücksichtigen einer vorgegebenen Minimalzeitdauer, in der der vorgegebene Grenzwert überschritten wird, umfasst.

**14.** Vorrichtung nach Anspruch 12 oder 13, die ferner an den Peripherieschnittstellen eine Schnittstellenleitung umfasst, an der ein Signal bereitgestellt wird, das sich an der mindestens einen durch die Auswahleinrichtung ausgewählten Peripherieschnittstelle ändert, um die Begrenzung des an die mindestens eine Peripherieschnittstelle gelieferten elektrischen Stroms anzugeben.

**15.** Vorrichtung nach einem der Ansprüche 12 bis 14, die ferner einen Nachrichtensender zum Senden einer Nachricht an der mindestens einen durch die Auswahleinrichtung ausgewählten Peripherieschnittstelle umfasst, wobei die Nachricht das Begrenzen des an die ausgewählte mindestens eine Peripherieschnittstelle gelieferten elektrischen Stroms angibt.

## Revendications

**1.** Un procédé de gestion de puissance électrique d'une pluralité d'interfaces périphériques (4213, 4214, 24, 27) permettant de connecter une pluralité de dispositifs périphériques (28, 29) à un dispositif électronique (40, 20), **caractérisé en ce que** le procédé comprend :

   détecter (501) que la somme des courants électriques fournis à la pluralité d'interfaces périphériques dépasse une limite prédéterminée ;
   sélectionner (502), au moment de ladite détection, au moins une interface périphérique de ladite pluralité d'interfaces périphériques pour limiter le courant électrique fourni à l'interface périphérique sélectionnée; et
   limiter (503) le courant électrique fourni à l'au moins une interface périphérique sélectionnée à une valeur maximale, la valeur maximale étant égale à la limite prédéterminée moins la somme des courants électriques fournis aux interfaces périphériques qui n'ont pas été sélectionnées dans l'étape de sélection.

**2.** Le procédé selon la revendication 1, dans lequel la détection comprend en outre la prise en compte d'une durée minimale prédéterminée de dépassement de la limite prédéterminée.

**3.** Le procédé selon la revendication 1 ou 2, dans lequel le procédé comprend la modification d'un signal sur l'au moins une interface périphérique sélectionnée, sélectionnée lors de l'étape de sélection, pour indiquer une limitation du courant électrique fourni à ladite au moins une interface périphérique sélectionnée.

**4.** Le procédé selon la revendication 3, dans lequel le niveau de signal est déterminé par la valeur maximale.

**5.** Le procédé selon l'une quelconque des revendications 1 à 4, dans lequel le procédé comprend la transmission d'un message sur l'au moins une interface périphérique sélectionnée, sélectionnée lors de l'étape de sélection, le message indiquant la limitation du courant électrique fourni à ladite au moins une interface périphérique sélectionnée.

**6.** Le procédé selon la revendication 5, dans lequel le message comprend la valeur maximale.

**7.** Le procédé selon l'une quelconque des revendications 1 à 6, dans lequel la sélection comprend le choix de limitation du courant électrique, parmi l'au moins une interface périphérique de la pluralité d'interfaces périphériques auxquelles est connecté un dispositif périphérique qui spécifie lors de la connexion au dispositif électronique, un besoin en courant électrique maximum qui dépasse celui d'un seuil prédéterminé pour un dispositif périphérique.

**8.** Le procédé selon l'une quelconque des revendications 1 à 7, le procédé comprenant en outre le choix, pour limiter le courant électrique, parmi l'au moins une interface périphérique de la pluralité d'interfaces périphériques auxquelles est connecté un dispositif périphérique qui est un dispositif qui ne transmet pas de données.

**9.** Le procédé selon l'une des revendications 1 à 8, le procédé comprenant en outre le choix, pour limiter le courant électrique, parmi l'au moins une interface périphérique de la pluralité d'interfaces périphériques qui sont dédiées aux ports de chargement.

**10.** Le procédé selon l'une des revendications 1 à 9, le procédé comprenant en outre le choix, pour limiter le courant électrique, parmi l'au moins une interface périphérique de la pluralité d'interfaces périphériques qui sont des dispositifs de faible priorité.

**11.** Le procédé selon l'une des revendications 1 à 10, la pluralité des interfaces périphériques dépendant d'une version de connecteur bus série universel (USB).

**12.** Un dispositif de gestion de puissance électrique d'une pluralité d'interfaces périphériques (24, 27), connectant une pluralité de dispositifs périphériques, **caractérisé en ce que** le dispositif comprend :

un détecteur détectant si la somme des courants électriques fournis à la pluralité d'interfaces périphériques dépasse une limite prédéterminée ;
un sélecteur permettant de sélectionner lors de ladite détection, au moins une interface périphérique de ladite pluralité d'interfaces périphériques pour limiter le courant électrique fourni à l'interface périphérique sélectionnée au moins ; et
un limiteur de courant limitant le courant électrique fourni à l'au moins une interface périphérique sélectionnée à une valeur maximale, la valeur maximale étant égale à la limite prédéfinie moins la somme des courants électriques fournis aux interfaces périphériques qui n'ont pas été sélectionnées par ledit sélecteur.

13. Le dispositif selon la revendication 12, comprenant en outre un minuteur pour prendre en compte une durée minimale prédéfinie de dépassement de la limite prédéfinie.

14. Le dispositif selon la revendication 12 ou 13, comprenant en outre une ligne d'interface sur les interfaces périphériques sur laquelle est fourni un signal qui change sur l'au moins une interface périphérique sélectionnée par le sélecteur, pour indiquer la limitation du courant électrique fourni à l'au moins une interface périphérique.

15. Le dispositif selon l'une quelconque des revendications 12 à 14, comprenant en outre un transmetteur pour transmettre un message sur l'au moins une interface périphérique sélectionnée par le sélecteur, le message indiquant la limitation du courant électrique fourni à ladite l'au moins une interface périphérique sélectionnée.

PRIOR ART

**Fig. 1**

**Fig. 2**

Fig. 3

**Fig. 4**

**Fig. 5**

**EP 2 728 440 B1**

**Patent documents cited in the description**

- US 8218279 B